# EUROPÄISCHE PATENTSCHRIFT

(11) **EP 2 849 011 B1**
(45) Veröffentlichungstag und Bekanntmachung des Hinweises auf die Patenterteilung: **06.03.2019**
(21) Anmeldenummer: 13183861.7
(22) Anmeldetag: 11.09.2013
(51) Int. Cl.: G05B 19/404, B23Q 1/01, B23Q 11/00

(54) **Positioniereinrichtung**
Positioning device
Dispositif de positionnement

(43) Veröffentlichungstag der Anmeldung: 18.03.2015
(73) Patentinhaber: ETEL S.A., 2112 Môtiers (CH)
(72) Erfinder: Heiniger, Laurent, 2052 Fontainemelon (CH); Vaucher, Jean-Marc, 2108 Couvet (CH)
(74) Vertreter: Pleyer, Hans Anno

(56) Entgegenhaltungen:
- EP-B1- 2 066 996
- DE-A1- 10 249 334
- DE-A1-102005 001 845

## Beschreibung

Die vorliegende Erfindung betrifft eine Positioniereinrichtung zur Bearbeitung eines Werkstücks oder zur Platzierung von Komponenten in einer Ebene. Solche Positioniereinrichtungen dienen beispielsweise dazu, elektronische Komponenten auf einer Leiterplatte zu positionieren, oder auch um flache Werkstücke mit einem Werkzeug zu bearbeiten.

Aus der EP 2066996 B1 ist eine Positioniereinrichtung in Portalbauweise bekannt, bei der zwischen zwei parallelen Linearführungen ein Querbalken beweglich gelagert ist, auf welchem mittels einer weiteren Linearführung ein Funktionselement beweglich gelagert ist, so dass dieses Funktionselement in einer Ebene zwischen den beiden parallelen Linearführungen frei positionierbar ist. Als Funktionselement kommt hier beispielsweise ein Greifer eines Bestückungsautomaten, ein Laser eines Laser-Bearbeitungszentrums oder auch ein Tastsystem einer Koordinatenmessmaschine in Frage. Die genannte EP 2066996 B1 beschäftigt sich vor allem mit einer möglichst genauen Positionsmessung an solchen Positioniereinrichtungen, da eine genaue Positionierung des Funktionselementes oft sehr wichtig ist.

Auch die DE 102009008900 A1 beschäftigt sich mit solchen Positioniereinrichtungen in Portalbauweise. Diese sind aus verschiedenen Gründen regelungstechnisch nicht einfach zu beherrschen. Es wird daher eine Einrichtung zum Regeln einer Positioniereinrichtung offenbart, mit der eine besonders genaue Positionierung möglich ist.

Wenn jedoch das Funktionselement, das am Querbalken geführt und über dem Werkstück positioniert wird, eine erhebliche Kraft auf das Werkstück ausüben muss, so kann dies dazu führen, dass die Bestandteile der Positioniereinrichtung deformiert werden. Wegen der großen Hebel, die durch die Portalbauweise entstehen, können dabei schon kleine Verformungen zu einem erheblichen Versatz des Angriffspunktes des Werkzeugs am Werkstück führen, der für Anwendungen mit hoher Anforderung an die Positioniergenauigkeit inakzeptabel ist. Ein Beispiel für eine solche Anwendung ist das Thermokompressionsbonden, bei dem elektronische Bauteile mittels Druck und Temperatur mit einer Leiterplatte verbunden werden. Hierzu können Kräfte bis zu 500 N nötig sein. Andererseits sind in solchen und vergleichbaren Anwendungen geforderte Positioniergenauigkeiten im Bereich von einem Mikrometer und darunter nicht ungewöhnlich.

Die nicht vorveröffentlichte Patentanmeldung mit der Nummer EP13161309.3 schlägt deshalb vor, die auf das Werkzeug wirkenden Prozesskräfte nicht über den Querbalken der Positioniereinrichtung in Portalbauweise zu führen, sondern über einen separaten Kraftrahmen, der oberhalb des Werkzeugs angeordnet ist. Die Prozesskraft wird dabei nicht mehr von der Positioniereinrichtung in Portalbauweise aufgebracht, sondern von einem Pneumatikzylinder, der zwischen dem Werkzeug und dem Kraftrahmen wirkt. Mit solchen Pneumatikzylindern ist es allerdings schwierig, einen schnellen Wechsel zwischen hoher Prozesskraft und Entlastung zu erreichen, wie es für manche Anwendungen wie beispielsweise das Thermokompressionsbonden von Vorteil ist.

Es ist daher Aufgabe der Erfindung, eine Positioniereinrichtung in Portalbauweise zu schaffen, die trotz hoher Prozesskräfte eine genaue Positionierung des Funktionselementes ermöglicht, und dabei einen schnellen Wechsel zwischen hoher Prozesskraft und Entlastung des Werkzeugs ermöglicht.

Diese Aufgabe wird gelöst durch eine Vorrichtung gemäß Anspruch 1. Vorteilhafte Details dieser Vorrichtung ergeben sich auch aus den von Anspruch 1 abhängigen Ansprüchen.

Es wird eine Positioniereinrichtung in Portalbauweise beschrieben, mit zwei parallelen Linearführungen mit integrierten Linearantrieben, die je einen X-Laufwagen in einer X-Richtung beweglich halten, sowie mit einem mit den beiden X-Laufwagen verbundenen Querbalken, der mittels eines integrierten Linearantriebs einen Y-Laufwagen in einer zur X-Richtung senkrechten Y-Richtung beweglich hält. Die Positioniereinrichtung weist außerdem einen Werkzeughalter, auf, der am Y-Laufwagen in einer Z-Richtung geführt ist und ein Werkzeug zur Bearbeitung eines in einer X-Y-Ebene angeordneten Werkstücks trägt, wobei das Werkzeug in X-Richtung versetzt neben dem Querbalken angeordnet ist. Ein in Z-Richtung oberhalb des Werkzeugs angeordneter Kraftrahmen überträgt eine auf das Werkzeug wirkende Prozesskraft auf die Laufwagen. Die Prozesskraft wird dabei von einem Elektromagnet aufgebracht, der zwischen dem Kraftrahmen und dem Werkzeughalter wirkt.

Der Kraftrahmen sorgt also dafür, dass die eigentlich ungünstige Anordnung des Werkzeugs seitlich am Querbalken nicht zu einem Drehmoment führt, das den Querbalken verformen und damit die Positioniergenauigkeit des Werkzeugs verschlechtern würde. Der Arbeitsbereich des Elektromagneten ist zwar mit typisch unter einem Millimeter relativ klein, da aber die Kraft in vielen Applikationen wie dem Thermokompressionsbonden nur in definierten Positionen benötigt wird, genügt das vollkommen. Elektromagnete lassen sich sehr schnell ein- und wieder ausschalten, so dass eine sehr präzise Steuerung der Prozesskraft möglich wird.

Weitere Vorteile und Einzelheiten der vorliegenden Erfindung ergeben sich aus der nachfolgenden Beschreibung verschiedener Ausführungsformen anhand der Figuren. Dabei zeigt
- Figur 1: eine Positioniereinrichtung in Portalbauweise gemäß dem Stand der Technik,
- Figur 2: das im Stand der Technik auftretende Problem bei großen Prozesskräften,
- Figur 3: eine weitere Positioniereinrichtung in Portalbauweise gemäß dem Stand der Technik,
- Figur 4: ein Ausführungsbeispiel der Erfindung,
- Figur 5: eine Seitenansicht dieses Ausführungsbeispiels.

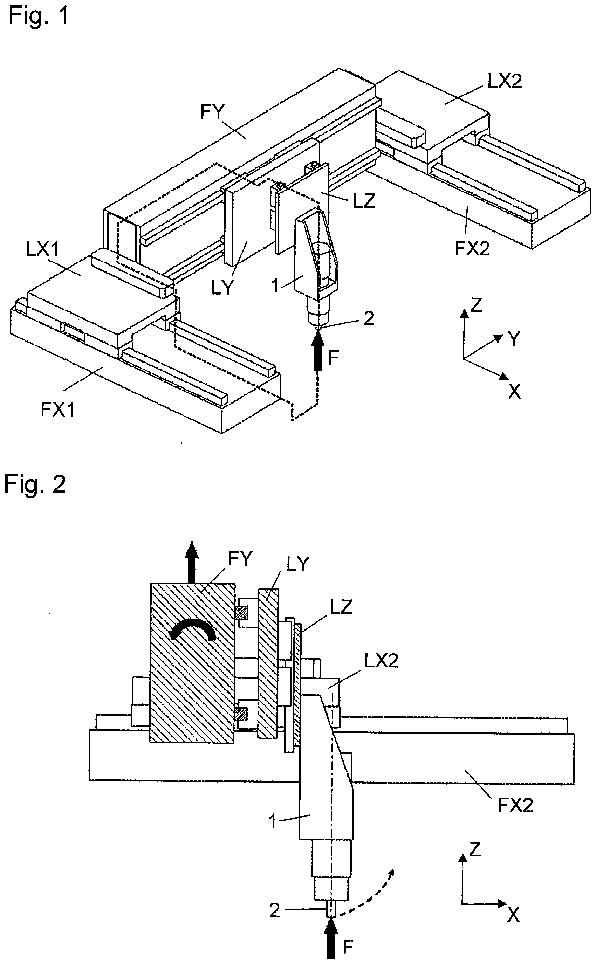

Die Figur 1 zeigt eine Positioniereinrichtung in Portalbauweise gemäß dem Stand der Technik. In einer X-Richtung liegen parallel zueinander zwei Linearführungen FX1, FX2 mit integrierten Linearantrieben, die zwei X-Laufwagen LX1, LX2 in X-Richtung beweglich halten. An den beiden Laufwagen LX1, LX2 befestigt ist eine Linearführung, die den Querbalken FY des Portalrahmens der Positioniereinrichtung bildet. Dieser Querbalken FY kann in X-Richtung über dem Arbeitsbereich zwischen den beiden Linearführungen FX1 und FX2 positioniert werden.

An der Linearführung FY ist ein Y-Laufwagen LY beweglich geführt, der mittels eines weiteren Linearantriebs zwischen den beiden Linearführungen FX1 und FX2 in Y-Richtung positioniert werden kann. Durch eine geeignete Ansteuerung der Antriebe in den Linearführungen FX1, FX2 und FY lässt sich der Y-Laufwagen LY frei über dem Arbeitsbereich zwischen den beiden Linearführungen FX1 und FX2 positionieren.

Der Y-Laufwagen LY trägt nun eine weitere Linearführung mit integriertem Antrieb, die einen Z-Laufwagen LZ in der Z-Richtung beweglich hält, die senkrecht auf die durch die X- und Y-Richtung aufgespannte Bearbeitungsebene steht.

Somit ist ein am Z-Laufwagen LZ befestigter Werkzeughalter 1 und ein von diesem gehaltenes Werkzeug 2 in allen drei Raumrichtungen X, Y und Z positionierbar. Beim Werkzeug 2 kann es sich beispielsweise um einen Greifer handeln, der ein elektronisches Bauelement aufnimmt und dieses auf eine im Arbeitsbereich abgelegte Leiterplatte setzt. Die hierfür nötige Kraft F wird vom Antrieb des Z-Laufwagens LZ aufgebracht. Da der Z-Laufwagen LZ in X-Richtung versetzt seitlich am Querbalken FY angeordnet ist, bewirkt diese vertikale Kraft F in Z-Richtung ein Drehmoment auf den Querbalken FY.

Mit der Bezeichnung "in X-Richtung versetzt" ist hier und in der übrigen Beschreibung ein Abstand in X-Richtung der Projektion zweier Elemente (hier des Querbalkens FY und des Z-Laufwagens LZ) in die X-Y-Ebene gemeint.

Mit einer gestrichelten Linie ist in der Figur 1 die Kraftschleife eingezeichnet, die beim Aufsetzen des Werkzeugs 2 auf das in der X-Y-Ebene angeordnete Werkstück die Bestandteile der Positioniereinrichtung belastet. Wie man erkennen kann, ist der Querbalken FY Bestandteil dieser Kraftschleife, was bei hohen Kräften Nachteile bringt.

Die Figur 2 zeigt einen Schnitt durch die Positioniereinrichtung der Figur 1. Der Schnitt liegt in der X-Z-Ebene und verläuft durch den Z-Laufwagen LZ. Man erkennt, dass durch eine große Prozesskraft F, wie sie beispielsweise beim thermoelektrischen Bonden eines Bauteiles auf eine Leiterplatte auftreten kann, wegen des sehr asymmetrischen Aufbaus der Positioniereinrichtung ein hohes Drehmoment auftritt, das den Querbalken FY des Portalrahmens verbiegen und so zu einer Auslenkung des Werkzeugs 2 führen kann. Diese Auslenkung ist mit einem gestrichelten Pfeil am Werkzeug 2 angedeutet. Beim Thermokompressionsbonden führt diese Auslenkung auch zu einer Verkippung eines zu platzierenden Bauteils, wodurch die geforderte hohe Parallelität zwischen Bauteil und Leiterplatte nicht eingehalten werden kann.

Eine einfache Lösung zur Vermeidung dieses Drehmomentes wäre ein bezüglich der Prozesskraft F symmetrischer Aufbau der Positioniereinrichtung. Es kann aber Anforderungen geben, die so einen symmetrischen Aufbau unmöglich machen. So kann es notwendig sein, dass die Linearführungen LX1, LX2 einen zweiten Querbalken mit einem zweiten Werkzeug tragen, das möglichst nahe an das erste Werkzeug 2 heran gebracht werden muss. Die beiden Werkzeuge müssen dann wie in den Figuren 1 und 2 dargestellt, seitlich an ihrem jeweiligen Querbalken angeordnet werden, um dieses Ziel zu erreichen.

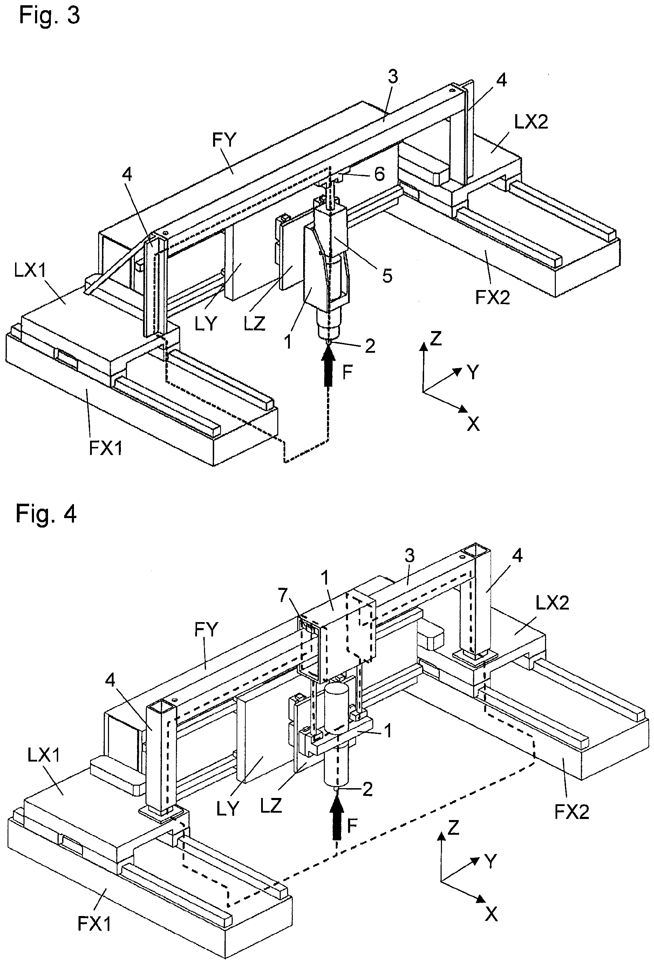

In der Figur 3 ist daher eine Modifikation der herkömmlichen Positioniereinrichtung gezeigt, wie sie in der eingangs genannten Patentanmeldung mit der Anmeldenummer EP13161309.3 beschrieben ist.

Es kommt nun ein zusätzlicher Kraftrahmen 3 zum Einsatz. Dieser Kraftrahmen 3 verläuft parallel zum Querbalken FY des Portalrahmens. Seine Projektion in die X-Y Bearbeitungsebene liegt jedoch nicht (wie die Projektion des Querbalkens FY) weit neben dem Angriffspunkt der Prozesskraft F, sondern wesentlich näher an diesem Angriffspunkt, idealer Weise in Z-Richtung oberhalb dieses Angriffspunktes. An diesem Kraftrahmen 3 stützt sich ein Ende eines Pneumatikzylinders 5 ab, dessen anderes Ende mit dem Werkzeughalter 1 verbunden ist. Dieser Pneumatikzylinder 5 bringt nun den größten Teil der Prozesskraft F auf, die vom Kraftrahmen 3 aufgenommen und über Stützen 4 auf die Laufwagen LX1 und LX2 übertragen wird. Die Prozesskraft F muss also nicht vom Querbalken FY aufgenommen werden. Hinsichtlich der Prozesskraft F ist damit die Asymmetrie der Mechanik beseitigt oder zumindest deutlich reduziert. Dies gilt somit auch für das störende Drehmoment und die resultierende Auslenkung des Werkzeugs 2.

Damit der Werkzeughalter 1 in Y-Richtung beweglich ist, weist der Kraftrahmen 3 an seiner Unterseite eine Führung auf. Der Pneumatikzylinder 5 ist am Laufwagen 6 dieser Führung befestigt. Der Werkzeughalter 1 kann somit weiterhin vom angetriebenen Y-Laufwagen LY in Y-Richtung positioniert werden. Der Werkzeughalter 1 wird in Z-Richtung vom Linearantrieb des Z-Laufwagens positioniert, die benötigte hohe Prozesskraft F wird aber nach dem Aufsetzen des Werkzeugs 2 auf dem Werkstück vom Pneumatikzylinder 5 aufgebracht. Da diese Kraft F vom Kraftrahmen 3 aufgenommen wird, belastet sie den Linearantrieb des Z-Laufwagens LZ nicht.

Der Kraftrahmen 3 benötigt eine gewisse Steifigkeit in Z-Richtung, um die Prozesskraft F aufnehmen zu können, er muss aber nicht vollkommen steif sein, da eine gewisse Durchbiegung vom Pneumatikzylinder 5 ausgeglichen und die Prozesskraft unabhängig von der Durchbiegung eingestellt werden kann. In vielen Applikationen beträgt der Arbeitsbereich in Z-Richtung zwar einige Zentimeter (um etwa Kollisionen mit bereits in der Arbeitsebene platzierten Bauteilen zu vermeiden), der Bereich, in dem ein Bauteil mit Kraft aufgesetzt werden muss, ist aber wesentlich kleiner, etwa im Bereich eines Millimeters.

Auch in der Figur 3 ist die bei Belastung des Werkzeugs wirkende Kraftschleife angedeutet. Wie man durch Vergleich mit der Figur 1 erkennen kann, ist der Querbalken FY nun nicht mehr Teil dieser Kraftschleife. Das in der Figur 2 erklärte, besonders störend wirkende Drehmoment und die damit verbundene Auslenkung tritt nicht mehr auf.

Wie in der eingangs zitierten DE 102009008900 A1 näher erläutert wird, ist eine gewisse Flexibilität zwischen dem Querbalken FY eines Portalrahmens und den beiden parallelen Linearführungen FX1, FX2 notwendig, weil die beiden parallelen laufenden X-Laufwagen LX1, LX2 nie exakt gleich angesteuert werden können. Hierzu sind am Querbalken FY geeignete Schnittstellen z.B. in Form von Biegegelenken vorzusehen. Ein Nachteil dieser Anordnung ist, dass diese nötige Flexibilität auch für den Kraftrahmen 3 konstruktiv berücksichtigt werden muss, was den Aufwand für so eine Lösung erhöht. Es ist daher in hier nicht gezeigter Weise auch möglich, den Kraftrahmen 3 mittels Stützen direkt an den äußeren Enden des Querbalkens FY und möglichst nahe an dessen Schnittstellen (z.B. Biegegelenken) abzustützen. Der Kraftrahmen 3 benötigt dann keine eigene Lösung für den Ausgleich leicht unterschiedlicher Positionierung der beiden X-Laufwagen LX1, LX2 in X-Richtung. Allerdings müssen nun die Schnittstellen des Querbalkens FY zu den X-Laufwagen LX1, LX2 die Prozesskraft F vollständig aufnehmen und deswegen entsprechend stabiler ausgeführt werden.

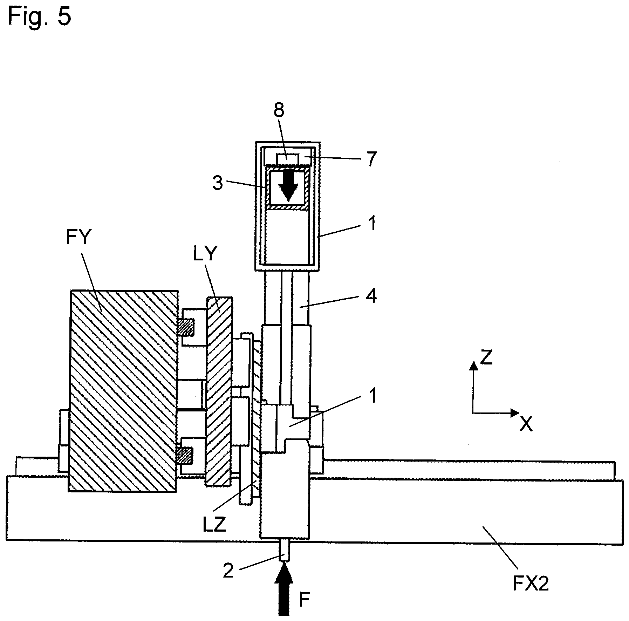

In der Figur 4 (Schrägansicht) bzw. Figur 5 (Seitenansicht) ist nun eine Weiterentwicklung des in der Figur 3 gezeigten Konzeptes als Ausführungsbeispiel für die Erfindung gezeigt. Anstelle eines relativ träge reagierenden Pneumatikzylinders erbringt hier ein Elektromagnet 7 die benötigte hohe Prozesskraft F.

Der Elektromagnet 7 ist mit einem den Kraftrahmen 3 umgreifenden Bereich des Werkzeughalters 1 verbunden und so oberhalb des Kraftrahmens 3 angeordnet, dass er im eingeschalteten Zustand eine Kraft erzeugt, die den Elektromagnet 7 zum Kraftrahmen 3 und damit den Werkzeughalter 1 und das Werkzeug 2 "nach unten" drückt. Das Werkzeug 2 kann so z.B. ein elektronisches Bauteil durch Thermokompressionsbonden mit einem im Arbeitsbereich zwischen den Linearführungen FX1, FX2 liegendes Substrat verbinden.

Der den Kraftrahmen 3 umgreifende Bereich des Werkzeughalters 1 ist beispielsweise wie dargestellt als Hohlprofil mit rechteckigem Querschnitt ausgebildet, durch dessen inneren Bereich der Kraftrahmen 3 verläuft.

Der Elektromagnet 7 weist vorteilhaft einen E-förmigen Kern auf, dessen mittlerer Zahn mit einer Spule 8 bewickelt ist. Die Zähne sind auf den Kraftrahmen 3 gerichtet. Die Rückseite des E-förmigen Kerns ist mit dem Hohlprofil verbunden.

Der Kraftrahmen 3 muss jedenfalls zu einem Teil aus einem ferromagnetischen Material bestehen, denn er schließt den magnetischen Kreis des Elektromagneten 7. Ein Träger aus einem Leichtmetall wie Aluminium mit einer ferromagnetischen, dem Elektromagnet 7 zugewandten Platte ist ein Beispiel für einen geeigneten Kraftrahmen 3. Der Kraftrahmen 3 sollte dabei in X-Richtung etwas breiter sein als der Elektromagnet 7, um kleine Bewegungen des gegenüber dem Kraftrahmen 3 nicht geführten Elektromagneten 7 zu ermöglichen, ohne dass dabei die Prozesskraft F reduziert wird oder Kräfte in X-Richtung entstehen.

Die Anziehungskraft (und damit die Prozesskraft F) eines solchen Elektromagneten 7 wird sehr groß, wenn der Luftspalt zwischen dem E-förmigen Kern und dem Kraftrahmen 3 kleiner als etwa ein Millimeter ist, nimmt aber auch sehr schnell ab, wenn dieser Luftspalt größer wird. Die vom Elektromagnet 7 erzeugte Kraft hängt nämlich in etwa vom Quadrat des im der Spule 8 fließenden Stromes und vom Kehrwert des Quadrats des Luftspaltes ab.

Der Kraftrahmen 3 kann durch die hohen Prozesskräfte F verformt werden. Es kann daher notwendig sein, die Größe des Luftspalts mit einem Abstandssensor (z.B. kapazitiv oder induktiv) zu messen und bei der Regelung zu berücksichtigen, indem entweder der Spulenstrom entsprechend angepasst oder der Luftspalt konstant gehalten wird.

In der Seitenansicht der Figur 5 kann man erkennen, dass die vom Elektromagnet 7 erzeugte Kraft und die als Gegenkraft wirkende Prozesskraft F antiparallel und sehr genau aufeinander ausgerichtet sind, so dass kein störendes Drehmoment erzeugt wird.

Wird das Werkzeug 2 von der Bearbeitungsebene in Z-Richtung nach oben abgehoben, entfernt sich der Elektromagnet 7 vom Kraftrahmen 3. In dieser Position kann der Elektromagnet 7 keine Kraft aufbringen. Dies ist aber auch nicht nötig. Es muss nur sichergestellt werden, dass immer dann, wenn das Werkzeug 2 in einer Bearbeitungsposition steht, der Elektromagnet 7 nahe genug am Kraftrahmen 3 positioniert ist.

Um dennoch eine Prozesskraft F über einen größeren Z - Bereich zur Verfügung stellen zu können (etwa wenn Komponenten unterschiedlicher Bauhöhe oder ein Substrat mit unterschiedlichen Ebenen bearbeitet werden soll), muss der Kraftrahmen 3 in der Z-Richtung, also parallel zur Prozesskraft F, verstellbar sein. Der Antrieb für diese Verstellbarkeit muss nicht besonders dynamisch sein und kann beispielsweise mittels einer Kugelumlaufspindel oder eines Keils erfolgen. Stellt man damit den Kraftrahmen 3 in eine Position, die zur vorab bekannten Bearbeitungsposition des Werkzeugs 2 passt, liegt der Elektromagnet 7 nahe genug am Kraftrahmen 3.

Die Vorteile eines Elektromagneten 7 in dieser Anwendung liegen darin, dass er nur dann betrieben wird, wenn tatsächlich eine Kraft nötig ist, und dass er die Dynamik der Z-Achse nicht beeinträchtigt, wenn er abgeschaltet ist. Verglichen mit einem Pneumatikzylinder kann der Elektromagnet 7 wesentlich dynamischer geregelt werden, die Prozesskraft F also schneller und genauer appliziert werden.

## Patentansprüche

1. Positioniereinrichtung in Portalbauweise, mit zwei parallelen Linearführungen (FX1, FX2) mit integrierten Linearantrieben, die je einen X-Laufwagen (LX1, LX2) in einer X-Richtung beweglich halten, sowie mit einem mit den beiden X-Laufwagen (LX1, LX2) verbundenen Querbalken (FY), der mittels eines integrierten Linearantriebs einen Y-Laufwagen (LY) in einer zur X-Richtung senkrechten Y-Richtung beweglich hält, sowie mit einem Werkzeughalter (1), der am Y-Laufwagen (LY) in einer zur X- und Y-Richtung senkrechten Z-Richtung geführt ist und ein Werkzeug (2) zur Bearbeitung eines in einer X-Y-Ebene angeordneten Werkstücks trägt, wobei das Werkzeug (2) in X-Richtung versetzt neben dem Querbalken (FY) angeordnet ist, **gekennzeichnet durch** einen in Z-Richtung oberhalb des Werkzeugs (2) angeordneter Kraftrahmen, der parallel zum Querbalken (FY) verläuft und eine auf das Werkzeug (2) wirkende Prozesskraft (F) in Z-Richtung auf die X-Laufwagen (LX1, LX2) überträgt, und einen zwischen dem Kraftrahmen (3) und dem Werkzeughalter (1) angeordneten Elektromagnet (7), der im eingeschalteten Zustand die Prozesskraft (F) erzeugt.

2. Positioniereinrichtung nach Anspruch 1, **dadurch gekennzeichnet, dass** der Kraftrahmen (3) die Prozesskraft (F) mittels Stützen (4) auf die Laufwagen (LX1, LX2) überträgt, ohne den Querbalken (FY) zu verformen.

3. Positioniereinrichtung nach Anspruch 1 oder 2, **dadurch gekennzeichnet, dass** der Kraftrahmen (3) mittels Stützen (4) an den X-Laufwagen (LX1, LX2) befestigt ist.

4. Positioniereinrichtung nach Anspruch 1 oder 2, **dadurch gekennzeichnet, dass** der Kraftrahmen (3) mittels Stützen an den Enden des Querbalkens (FY) befestigt ist.

5. Positioniereinrichtung nach einem der vorhergehenden Ansprüche, **dadurch gekennzeichnet, dass** der Elektromagnet (7) mit einem den Kraftrahmen (3) umgreifenden Bereich des Werkzeughalters (1) verbunden ist.

6. Positioniereinrichtung nach Anspruch 5, **dadurch gekennzeichnet, dass** der den Kraftrahmen (3) umgreifenden Bereich des Werkzeughalters (1) als Hohlprofil mit rechteckigem Querschnitt ausgebildet ist.

7. Positioniereinrichtung nach einem der vorhergehenden Ansprüche, **dadurch gekennzeichnet, dass** der Elektromagnet (7) einen E-förmigen Kern aufweist, dessen mittlerer Zahn mit einer Spule (8) bewickelt ist.

8. Positioniereinrichtung nach Anspruch 7, **dadurch gekennzeichnet, dass** die Zähne des E-förmigen Elektromagneten (7) auf den Kraftrahmen (3) gerichtet sind.

9. Positioniereinrichtung nach einem der vorhergehenden Ansprüche, **dadurch gekennzeichnet, dass** der Kraftrahmen (3) aus einem Leichtmetallträger mit einer ferromagnetischen, dem Elektromagnet (7) zugewandten Platte besteht.

10. Positioniereinrichtung nach einem der vorhergehenden Ansprüche, **dadurch gekennzeichnet, dass** die Lage des Kraftrahmens (3) parallel zur Prozesskraft (F) verstellbar ist.

## Claims

1. Positioning device of portal design, having two parallel linear guides (FX1, FX2) with integrated linear drives, which each hold an X-carriage (LX1, LX2) in a manner movable in an X direction, and having a crossbeam (FY) connected to the two X-carriages (LX1, LX2), which, by, means of an integrated linear drive, holds a Y-carriage (LY) in a manner movable in a Y direction perpendicular to the X direction, and having a tool holder (1), which is guided on the Y-carriage (LY) in a Z direction perpendicular to the X and Y direction and carries a tool (2) for machining a workpiece arranged in an X-Y plane, wherein the tool (2) is arranged next to the crossbeam (FY) in a manner offset in the X direction, **characterized by** a force frame, arranged in the Z direction above the tool (2), which extends parallel to the crossbeam (FY) and transmits a process force (F), acting on the tool (2), in the Z direction to the X-carriage (LX1, LX2), and by an electromagnet (7), arranged between the force frame (3) and the tool holder (1), which generates the process force (F) in the switched-on state.

2. Positioning device according to Claim 1, **characterized in that** the force frame (3) transmits the process force (F) to the carriages (LX1, LX2) by means of supports (4), without deforming the crossbeam (FY).

3. Positioning device according to Claim 1 or 2, **characterized in that** the force frame (3) is fastened to the X carriages (LX1, LX2) by means of supports (4).

4. Positioning device according to Claim 1 or 2, **characterized in that** the force frame (3) is fastened to the ends of the crossbeam (FY) by means of supports.

5. Positioning device according to one of the preceding claims, **characterized in that** the electromagnet (7) is connected to a region of the tool holder (1) that engages around the force frame (3).

6. Positioning device according to Claim 5, **characterized in that** the region of the tool holder (1) that engages around the force frame (3) is in the form of a hollow profile with a rectangular cross section.

7. Positioning device according to one of the preceding claims, **characterized in that** the electromagnet (7) has an E-shaped core, the central tooth of which is wound with a coil (8).

8. Positioning device according to Claim 7, **characterized in that** the teeth of the E-shaped electromagnet (7) are directed towards the force frame (3).

9. Positioning device according to one of the preceding claims, **characterized in that** the force frame (3) consists of a light-metal carrier having a ferromagnetic plate facing the electromagnet (7).

10. Positioning device according to one of the preceding claims, **characterized in that** the position of the force frame (3) is adjustable parallel to the process force (F).

## Revendications

1. Dispositif de positionnement de construction en portique, comprenant deux guides linéaires parallèles (FX1, FX2) avec des entraînements linéaires intégrés, qui retiennent chacun, de manière déplaçable dans une direction X, un chariot X (LX1, LX2), et comprenant une poutre transversale (FY) connectée aux deux chariots X (LX1, LX2), laquelle retient de manière déplaçable dans une direction Y perpendiculaire à la direction X un chariot Y (LY) au moyen d'un entraînement linéaire intégré, et comprenant un porte-outil (1) qui est guidé sur le chariot Y (LY) dans une direction Z perpendiculaire aux directions X et Y et qui porte un outil (2) pour l'usinage d'une pièce disposée dans un plan X-Y, l'outil (2) étant disposé, décalé dans la direction X, à côté de la poutre transversale (FY), **caractérisé par** un cadre de force disposé au-dessus de l'outil (2) dans la direction Z, lequel cadre de force s'étend parallèlement à la poutre transversale (FY) et transmet aux chariots X (LX1, LX2) une force de processus (F) agissant sur l'outil (2) dans la direction Z, et un électroaimant (7) disposé entre le cadre de force (3) et le porte-outil (1), lequel électroaimant génère la force de processus (F) à l'état mis sous tension.

2. Dispositif de positionnement selon la revendication 1, **caractérisé en ce que** le cadre de force (3) transmet la force de processus (F) au moyen de supports (4) aux chariots (LX1, LX2) sans déformer la poutre transversale (FY).

3. Dispositif de positionnement selon la revendication 1 ou 2, **caractérisé en ce que** le cadre de force (3) est fixé au moyen de supports (4) aux chariots X (LX1, LX2).

4. Dispositif de positionnement selon la revendication 1 ou 2, **caractérisé en ce que** le cadre de force (3) est fixé au moyen de supports aux extrémités de la poutre transversale (FY).

5. Dispositif de positionnement selon l'une quelconque des revendications précédentes, **caractérisé en ce que** l'électroaimant (7) est connecté à une région du porte-outil (1) entourant le cadre de force (3).

6. Dispositif de positionnement selon la revendication 5, **caractérisé en ce que** la région du porte-outil (1) entourant le cadre de force (3) est réalisée sous forme de profilé creux de section transversale rectangulaire.

7. Dispositif de positionnement selon l'une quelconque des revendications précédentes, **caractérisé en ce que** l'électroaimant (7) comprend une partie centrale en forme de E autour de la dent centrale de laquelle une bobine (8) est enroulée.

8. Dispositif de positionnement selon la revendication 7, **caractérisé en ce que** les dents de l'électroaimant (7) en forme de E sont orientées vers le cadre de force (3).

9. Dispositif de positionnement selon l'une quelconque des revendications précédentes, **caractérisé en ce que** le cadre de force (3) est constitué d'un support en métal léger doté d'une plaque ferromagnétique tournée vers l'électroaimant (7).

10. Dispositif de positionnement selon l'une quelconque des revendications précédentes, **caractérisé en ce que** la position du cadre de force (3) est réglable parallèlement à la force de processus (F).
